# EUROPEAN PATENT SPECIFICATION

(11) **EP 1 862 436 B1**
(45) Date of publication and mention of the grant of the patent: **11.08.2010**
(21) Application number: 07108258.0
(22) Date of filing: 15.05.2007
(51) Int. Cl.: C03B 9/353, C03B 9/41

(54) **I.S. machine**
I.S.-Gerät
Machine I.S

(30) Priority: 02.06.2006 US 445894
(43) Date of publication of application: 05.12.2007
(73) Proprietor: Emhart Glass S.A., 6330 Cham (CH)
(72) Inventor: Simon, Jonathan S., Pleasant Valley, Connecticut CT 06063 (US)
(74) Representative: Warren, Anthony Robert

(56) References cited:
- US-A- 2 744 358
- US-A- 4 983 203
- US-A- 5 824 131

## Description

The present invention relates to I. S. machines for forming glass containers, such as bottles, from gobs of molten glass.

In an I. S. machine, for example as disclosed in US-A-5,824,131, a gob of molten glass is delivered to a blank mold in which a "parison" is formed. The formed parison includes the "finish", i.e., the threads, etc. of the bottle to be formed which are at the bottom of the vertically standing parison. The parison also has an elongated vertical hole which extends upwardly from the finish. The finish is gripped by neck ring mold segments or halves carried by a pair of closed neck rings or segments. When the blank mold is opened, the neck ring is rotated 180 degrees to deliver the parison, finish-up, to the blow station where opposed blow mold segments or halves will be displaced into a clamped closed position about the parison. The finish, and hence the parison, is supported by the closed blow mold. Reheat then takes place, i.e., the skin of the parison which had been cooled to preserve the shape of the parison, is heated by the inner heat of the parison. When this happens the parison will sag or stretch downwardly by virtue of the parison being suspended from the mold. When the parison stretches to the desired length, either compressed air is introduced into the mold via a blow head sitting on top of the blow mold and/or vacuum is applied through the walls of the blow mold to displace the parison into the form of the mold.

The present invention is directed to an I.S. machine, and to a method of operating a blow mold of an I.S. machine, generally as disclosed in the aforesaid US-A, and as defined in the preambles of claims 1 and 5 respectively.

Often cooling air is directed upwardly through the side walls of the blow mold to remove heat from the mold. It has been suggested that such air tends to leak into the blow mold and, heated by the parison, creates a large pressure that tends to collapse the parison so that instead of a continuous hole, the hole is closed at some central location bringing one side of the parison into engagement with the other side of the parison. Should this happen, a "birdswing" can form when the parison is blown, which is a defect requiring the rejection of the ultimately formed bottle.

To avoid birdswings, operators conventionally delay the start of cooling air until the parison has been blown, but this slows down the cycle time and this is undesirable.

It is accordingly an object of the present invention to provide a better solution for this problem.

Reference is also made to US-A-2,744,358, which is concerned with a different problem, namely preventing a relatively stubby parison, when initially transferred to an open paste or blow mold by the neck ring mechanism, from being pinched or contacted by the blow mold when closed. Movement of the blow mold halves part way towards their closed position around the parison actuates a first tongs mechanism to grip and support the parison finish below the neck ring mechanism. The neck ring mechanism is then withdrawn, providing clearance for a further tongs mechanism to advance, grip, and take over support of the parison finish. The blow mold halves are then fully opened, releasing the first tongs mechanism, and allowing cooling water to be sprayed onto the internal surfaces of the mold halves. Whilst these operations take place, the parison becomes elongated, and the blow mold halves can then be fully closed and the parison blown to final form.

According to the present invention, there is provided an I.S. machine, and a method of operating a blow mold of an I.S. machine, as defined in characterizing clauses of claims 1 an 5 respectively.

Reference will now be made to the accompanying drawings which illustrate a presently preferred embodiment incorporating the principles of the invention, and in which:-
Figure 1 is a side elevational view of a conventional blow mold of an 1. S. machine closed about a parison;
Figure 2 is a schematic view showing a conventional blow mold open and close mechanism;
Figure 3 is a logic diagram illustrating the operation of a control for the blow mold open and close mechanism embodying the invention; and
Figure 4 is a view similar to that of Figure 1 with the blow molds cracked during reheat according to this embodiment of the invention.

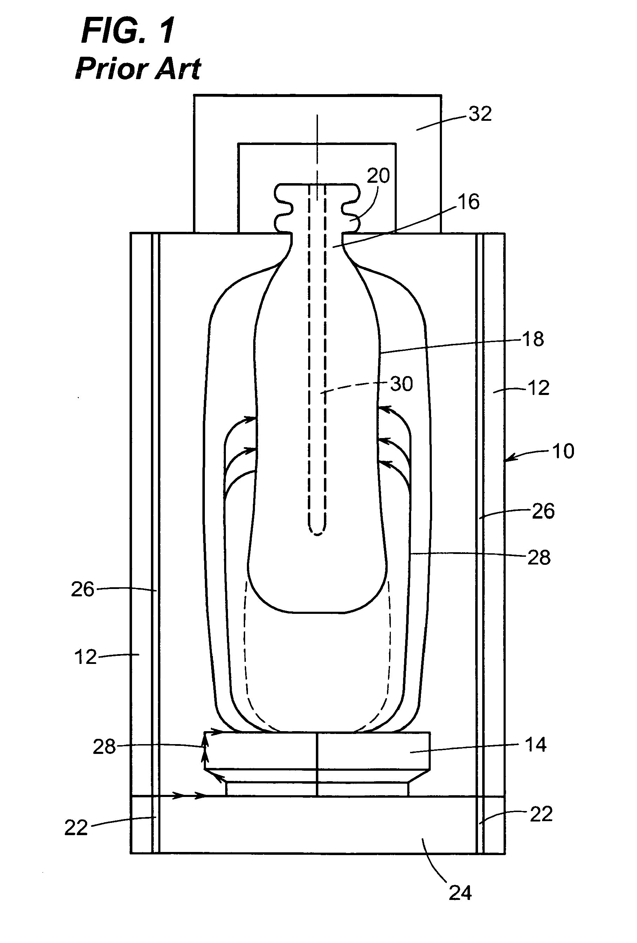

Each section of an 1. S. machine forms one or more gobs of molten glass into a bottle. For each gob there will be a blank mold for forming a gob into a parison and a blow mold for forming the parison into a bottle. A blow mold 10 is shown in Figure 1 which is made up of an opposed pair of mold sides, segments or halves 12 and a bottom plate 14 which interfits with the mold sides when fully closed as shown. As shown, the fully closed blow mold sides grip the neck 16 of a parison 18. The finish 20 of the parison was held by the neck ring segments of an invert mechanism until the parison became supported by the blow mold. The neck ring segments then opened and were displaced back to the blank mold.

The parison, which has a long hole 30 extending downwardly from the top, will reheat, i.e., the chilled skin will be heated by the internal heat of the parison, and once reheated the parison will begin to stretch downwardly. When the parison stretches down to the bottom plate as shown in dotted lines, the parison will be transformed into a bottle either by applying vacuum to the inside surface of the mold or by applying air pressure via a blowhead 32 located on top of the blow mold.

Cooling air is supplied to vertical holes 22 in the base 24 for the bottom plate 14 and these holes communicate with cooling holes 26 extending vertically through the blow mold sides 12. When a source of pressurized air is turned on cooling air will be forced through these cooling holes to remove heat from the blow mold sides. It is believed that this cooling air bleeds between the bottom surface of the blow mold and the top surface of the base and works its way between the bottom plate and the mold sides into the interior of the blow mold and that this leakage expands due to the heat of the parison and acts to crush the parison ultimately causing a birdswing in the formed bottle. These pressure forces are illustrated with arrows 28.

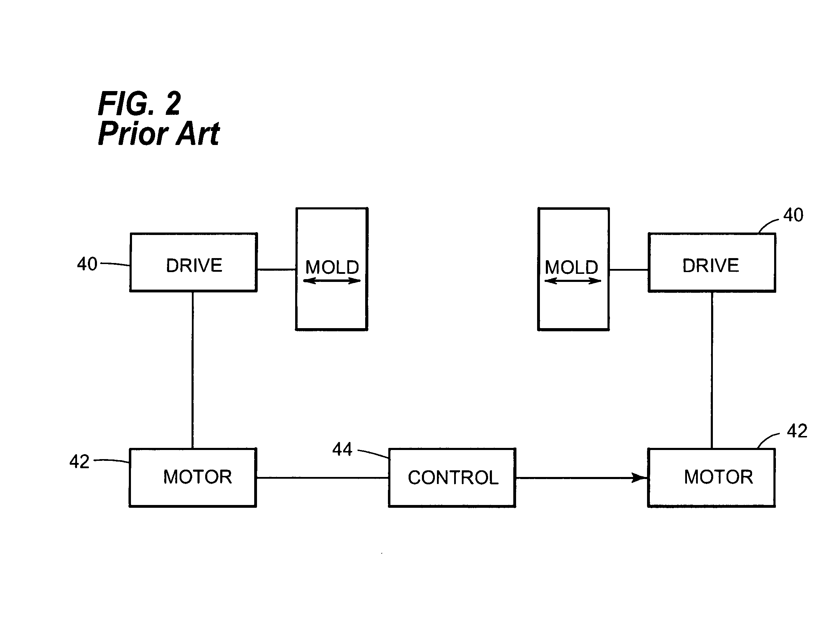

A conventional blow mold open and close mechanism is shown in Figure 2 where a pair of opposed mold sides 12 are supported for displacement toward and away from each other. Displacement is via a drive 40 powered by a motor 42. Motion is controlled by a suitable control 44.

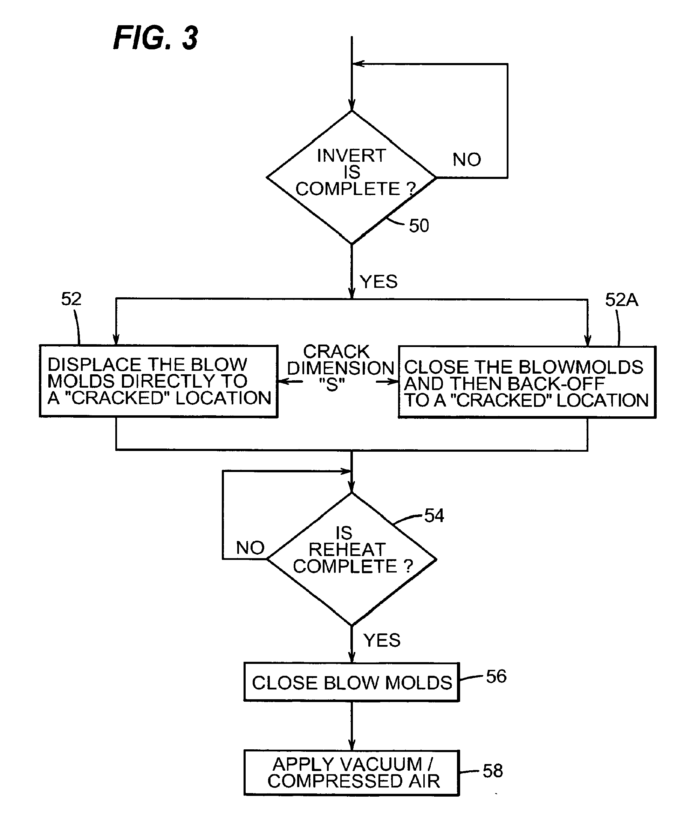

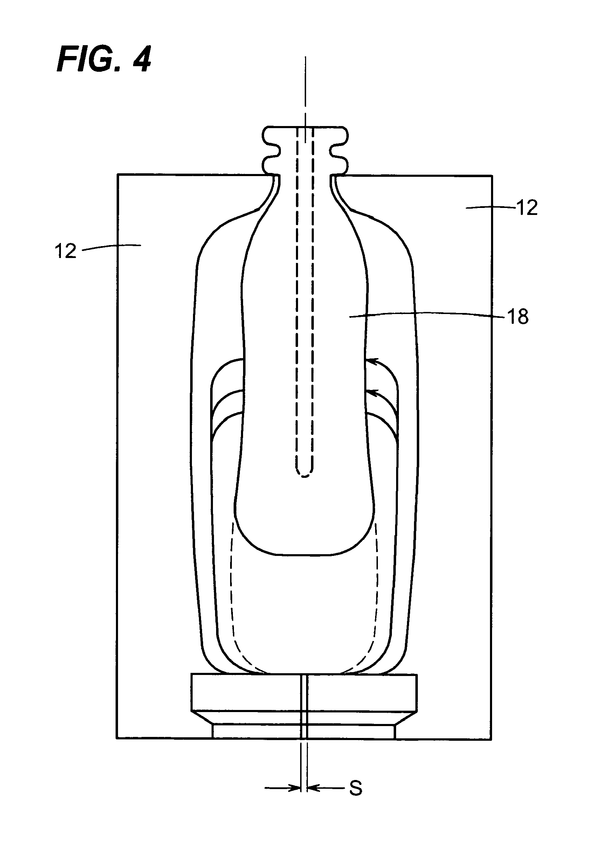

In accordance with an embodiment of the invention, and referring to Figure 3, when "Invert Is Complete?" 50 (This will be a time observed by an operator who is defining the event angles around a 360 degree timing drum - at this time the operator will see that the parison is located at the blow station and that the blow mold sides can be closed), the Control 44 will Displace The Blow Molds Directly To A Cracked Location 52. Figure 4 shows this cracked location where "S" represents the crack or separation between the blow mold sides. This separation, which can be set by the operator, will be limited so that the top of the mold will continue to support the finish of the bottle. As shown in Figure 3, this could be a one step feed process to the cracked location or the control can Close The Blow Molds And Then Back-off To A "Cracked" location 52A. The crack between the mold sides only has to be wide enough to prevent the pressurization of the mold between the parison and the mold inner surface.

When the query "Is Reheat Complete?" 54 is answered yes (which can be an automated function or determined by the operator), which means that it is time for the parison to be formed into a bottle, the Control 44 will Close Blow Molds 56 and then Apply Vacuum/Compressed Air 58 to transform the parison into a bottle in the closed blow mold.

## Claims

1. An 1. S. machine including a blow station whereat a parison (18) having a formed finish (20) is transformed into a container within a blow mold which supports the finish of the parison, the blow mold including a pair of opposed mold side segments (12) that are movable towards and away from each other, comprising
an open and close mechanism (40,42) for displacing the mold side segments (12) from a mutually remote location, to a closed position around a parison whereat the mold side segments support the finish (20) of the parison,
control means (44) for operating the open and close mechanism (40,42) to displace the mold side segments from their mutually remote location to their closed position,
**characterized in that**
the control means (44) is configured to operate the open and close mechanism (40,42)
(a) to displace the mold side segments (12) to a cracked position around a parison whereat a selected separation exists between the mold side segments which is limited to a crack (S) between the mold side segments such that, when a parison (18) is located within the blow mold with the mold side segments (12) located at the cracked position, the mold side segments will support the finish (20) of the parison while the parision reheats, and
(b) subsequently to displace the mold side segments to their closed position at the conclusion of reheat.

2. An I. S. machine according to claim 1, wherein the control means (44) is configured to operate the open and close mechanism (40,42) to displace the mold side segments (12) to a closed position before displacing the mold side segments to the said cracked position.

3. An I.S. machine according to claim 1, wherein the control means (44) is configured to operate the open and close mechanism (40, 42) to displace the mold side segments (12) directly to the said cracked position without first displacing the mold side segments to a closed position.

4. An I.S. machine according to any preceding claim, including means wherein the configuration of the control means (44) is adjustable by an operator to thereby adjust the selected separation.

5. A method of operating a blow mold of a blow station of an I.S. machine to transform a parison (18) having a formed finish (20) into a container within the blow mold, wherein the blow mold includes a pair of opposed mold side segments (12) that are movable towards and away from each other, which method includes displacing the mold side segments (12) from a mutually remote location, to a closed position whereat the mold side segments support the finish (20) of the parison,
**characterized by**
(a) displacing the mold side segments (12) to a cracked position around a parison (18) whereat a selected separation exists between the mold side segments which is limited to a crack (S) between the mold side segments such that the finish (20) of the parison is supported from the mold side segments while the parison reheats, and
(b) subsequently displacing the mold side segments to their closed position at the conclusion of reheat.

6. A method according to claim 5, which includes displacing the mold side segments (12) from the remote location to a closed position before displacing the mold side segments to the said cracked position.

7. A method according to claim 5, which includes directly displacing the mold side segments (12) from the remote location to the said cracked position without first displacing the mold side segments to a closed position.

8. A method according to any of claims 5 to 7, wherein the selected separation is adjustable by an operator.

## Patentansprüche

1. IS-Maschine, umfassend eine Blasstation, in der in einer Blasform ein Külbel (18) mit einem geformten Halsabschluss (20) in einen Behälter geformt wird, wobei die Blasform den Halsabschluss des Külbels trägt und ein Paar von gegenüberliegenden Formseitensegmenten (12) aufweist, die aufeinander zu und voneinander weg bewegbar sind, umfassend
einen Öffnungs- und Schließmechanismus (40, 42) zum Verschieben der Formseitensegmente (12) von einer gegenseitig entfernten Position in eine zweite Position um ein Külbel herum, in der die Formseitensegmente den Halsabschluss (20) des Külbels tragen,
eine Steuereinrichtung (44) zum Betreiben des Öffnungs- und Schließmechanismus (40, 42), um die Formseitensegmente von ihrer gegenseitig entfernten Position in ihre geschlossene Position zu verschieben,
**dadurch gekennzeichnet, dass**
die Steuereinrichtung (44) so konfiguriert ist, dass sie den Öffnungs- und Schließmechanismus (40, 42) betreibt,
(a) um die Formseitensegmente (12) in eine mit einem Riss versehene Position um das Külbel herum zu verschieben, in der zwischen den Formseitensegmenten ein ausgewählter Abstand besteht, der auf einen Riss (S) zwischen den Formseitensegmenten beschränkt ist, so dass, wenn ein Külbel in die Blasform verbracht wird, wenn sich die Blasformsegmente (12) in der mit dem Riss versehenen Position befinden, die Formseitensegmente den Halsabschluss (20) des Külbels tragen, während das Külbel wiedererhitzt wird, und
(b) um danach die Formseitensegmente ihre geschlossene Position beim Abschluss des Wiedererhitzens zu verschieben.

2. IS-Maschine nach Anspruch 1, wobei die Steuereinrichtung (44) so konfiguriert ist, dass sie den Öffnungs- und Schließmechanismus (40, 42) so verschiebt, dass die Formseitensegmente (12) in eine geschlossene Position verschoben werden, bevor die Formseitensegmente in die mit dem Riss versehene Position verschoben werden.

3. IS-Maschine nach Anspruch 1, wobei die Steuereinrichtung (44) so konfiguriert ist, dass sie den Öffnungs- und Schließmechanismus (40, 42) so betreibt, dass die Formseitensegmente (12) direkt in die mit dem Riss versehene Position verschoben werden, ohne dass die Formseitensegmente zunächst in eine geschlossene Position verschoben werden.

4. IS-Maschine nach einem der vorangegangenen Ansprüche, umfassend eine Einrichtung, wobei die Konfiguration der Steuereinrichtung (44) durch ein Bedienpersonal anpassbar ist, um den ausgewählten Abstand anzupassen.

5. Verfahren zum Betreiben einer Blasform einer Blasstation einer IS-Maschine, um ein Külbel (18) mit einem geformten Halsabschluss (20) in einer Blasform in einen Behälter zu formen, wobei die Blasform ein Paar von gegenüberliegenden Formseitensegmenten (12) umfasst, die aufeinander zu und voneinander weg bewegbar sind, wobei das Verfahren ein Verschieben der Formseitensegmente (12) von einer gegenseitig entfernten Position in eine geschlossene Position umfasst, in der die Formseitensegmente den Halsabschluss (20) des Külbels tragen,
**gekennzeichnet durch**
(a) Verschieben der Formseitensegmente (12) in eine mit einem Riss versehene Position um ein Külbel (18) hereum, wobei ein ausgewählter Abstand zwischen den Formseitensegmenten besteht, der auf einen Riss (S) zwischen den Formseitensegmenten beschränkt ist, so dass der Halsabschluss (20) des Külbels von den Formseitensegmenten getragen wird, während das Külbel wiedererhitzt wird, und
(b) danach Verschieben der Formseitensegmente in ihre geschlossene Position beim Abschluss des Wiedererhitzens.

6. Verfahren nach Anspruch 5, umfassend ein Verschieben der Formseitensegmente (12) aus der entfernten Position in eine geschlossene Position, bevor die Formseitensegmente in die mit dem Riss versehene Position verschoben werden.

7. Verfahren nach Anspruch 5, umfassend ein Verschieben der Formseitensegmente (12) aus der entfernten Position direkt in die mit dem Riss versehene Position, ohne dass die Formseitensegmente zunächst in eine geschlossene Position verschoben werden.

8. Verfahren nach einem der Ansprüche 5 bis 7, wobei der ausgewählte Abstand durch ein Bedienpersonal anpassbar ist.

## Revendications

1. Machine I.S. équipée d'un poste de soufflage dans lequel une paraison (18), munie d'une bague (20) mise en forme, est transformée en un récipient à l'intérieur d'un moule de soufflage supportant ladite bague de ladite paraison, ledit moule de soufflage offrant une paire de segments latéraux de moulage (12) opposés, mobiles en direction et à l'écart l'un de l'autre, comprenant
un mécanisme (40, 42) d'ouverture et de fermeture, agencé pour amener les segments latéraux de moulage (12) d'un emplacement d'éloignement réciproque à une position refermée autour d'une paraison, dans laquelle lesdits segments latéraux de moulage supportent la bague (20) de ladite paraison,
un moyen de commande (44) dévolu à l'actionnement dudit mécanisme (40, 42) d'ouverture et de fermeture, afin d'amener lesdits segments latéraux de moulage de leur emplacement d'éloignement réciproque à leur position fermée,
**caractérisée par le fait que**
ledit moyen de commande (44) est conçu pour actionner ledit mécanisme (40, 42) d'ouverture et de fermeture en vue
(a) d'amener les segments latéraux de moulage (12), autour de la paraison, à une position de clivage dans laquelle est réservé, entre les segments latéraux de moulage, un intervalle sélectionné cantonné à un interstice (S) entre lesdits segments latéraux de moulage, de façon telle que, lorsqu'une paraison (18) est située à l'intérieur du moule de soufflage, lesdits segments latéraux de moulage supportent la bague (20) de la paraison au cours du réchauffage de ladite paraison, et
(b) d'amener ensuite lesdits segments latéraux de moulage à leur position fermée, à l'achèvement du réchauffage.

2. Machine I.S. selon la revendication 1, dans laquelle le moyen de commande (44) est conçu pour actionner le mécanisme (40, 42) d'ouverture et de fermeture en vue d'amener les segments latéraux de moulage (12) à une position fermée avant d'amener lesdits segments latéraux de moulage à ladite position de clivage.

3. Machine I.S. selon la revendication 1, dans laquelle le moyen de commande (44) est conçu pour actionner le mécanisme (40, 42) d'ouverture et de fermeture en vue d'amener les segments latéraux de moulage (12) directement à ladite position de clivage, sans amener tout d'abord lesdits segments latéraux de moulage à une position fermée.

4. Machine I.S. selon une quelconque revendication précédente, comportant des moyens à l'aide desquels l'agencement du moyen de commande (44) peut être réglé, par un opérateur, de manière à ajuster l'intervalle sélectionné.

5. Procédé d'actionnement d'un moule de soufflage d'un poste de soufflage d'une machine I.S., afin de transformer en un récipient, à l'intérieur dudit moule de soufflage, une paraison (18) munie d'une bague (20) mise en forme, ledit moule de soufflage offrant une paire de segments latéraux de moulage (12) opposés, mobiles en direction et à l'écart l'un de l'autre, ledit procédé incluant un déplacement desdits segments latéraux de moulage (12), à partir d'un emplacement d'éloignement réciproque, à une position fermée dans laquelle lesdits segments latéraux de moulage supportent la bague (20) de ladite paraison,
**caractérisé par**
(a) un déplacement des segments latéraux de moulage (12), autour d'une paraison (18), à une position de clivage dans laquelle est réservé, entre les segments latéraux de moulage, un intervalle sélectionné cantonné à un interstice (S) entre lesdits segments latéraux de moulage, de façon telle que la bague (20) de ladite paraison soit supportée par lesdits segments latéraux de moulage au cours du réchauffage de ladite paraison, et
(b) un déplacement consécutif desdits segments latéraux de moulage à leur position fermée, à l'achèvement du réchauffage.

6. Procédé selon la revendication 5, incluant un déplacement des segments latéraux de moulage (12), de l'emplacement éloigné à une position fermée, préalablement à un déplacement desdits segments latéraux de moulage à ladite position de clivage.

7. Procédé selon la revendication 5, incluant un déplacement direct des segments latéraux de moulage (12) à ladite position de clivage, à partir de l'emplacement éloigné, sans amener tout d'abord lesdits segments latéraux de moulage à une position fermée.

8. Procédé selon l'une quelconque des revendications 5 à 7, dans lequel l'intervalle sélectionné peut être réglé par un opérateur.
